**Europäisches Patentamt**

**European Patent Office**

**Office européen des brevets**

(19)

(11) Publication number : **0 494 103 A1**

(12) # EUROPEAN PATENT APPLICATION

(21) Application number : **92300007.9**

(22) Date of filing : **02.01.92**

(51) Int. Cl.⁵ : **C02F 1/28, B01J 8/02**

(30) Priority : **03.01.91 GB 9100079**

(43) Date of publication of application :
**08.07.92 Bulletin 92/28**

(84) Designated Contracting States :
**BE DE ES FR GB IT NL**

(71) Applicant : **H&G PROCESS CONTRACTING LTD**
**Grosvenor House, 125 High Street**
**Croydon, Surrey CR0 9PX (GB)**

(72) Inventor : **Osborne, David John**
**75 Elm Walk, Raynes Park**
**London SW20 9EE (GB)**

(54) **Activated carbon adsorber.**

(57)    An arrangement for treating water with activated carbon comprising an adsorber characterised by having at least part annular plan with the base of the annulus sloped and the annular space divided by radial walls that compartmentalise the annulus.

FIG. 1

EP 0 494 103 A1

Jouve, 18, rue Saint-Denis, 75001 PARIS

This invention relates to the design of an Activated Carbon Adsorber. In particular it is a design of a Granular Activated Carbon (GAC) Adsorber Vessel for use with large water flows.

In the potable water industry a need has arisen to remove eg pesticides, herbicides, etc, which are present in low levels of concentration in water from eg rivers and boreholes. Removal is normally effected by passing the water through beds of GAC, having significant contact times of eg 10 to 30 minutes based upon empty bed volume.

This invention is a design of an adsorber that may be filled with Activated Carbon eg GAC having the following features:

1. An annular plan with the base of this annulus sloped, and
2. The annular space is divided by radial walls to compartmentalise the annulus.

Preferably:

1. The slope in the annulus is towards the centre of the annulus ie so as to give a cross section of the annulus having a low point in the centre of the annulus. However, this invention does encompass the case where an annulus space is sloped towards or away from the centre of the adsorber such that the low point of each compartment is near (or at) the centre of the adsorber, or at the outside respectively.
2. The compartments are sized to be one or two or possibly three road tanker volumes of GAC.
3. The central well of the adsorber is used to provide entry of service pipes eg water in and out, backwash water in and out, GAC in and out and air-scour in.
4. One of the compartments formed by the division walls may not be used for adsorption but may provide access to and from the central well.
5. Movement of GAC during its removal may be aided by an undermining system of water jets if the slope angle(s) of the base of the annulus is shallow.

The adsorber wall forming the external part of the annulus may be made from eg

– Precast concrete externally wired reinforced panels
– Conventional concrete
– Coated steel
– Coated steel panels eg bolted glassed steel panels

The inner central well walls and division walls may be made from eg

– Conventional concrete
– Steel, coated on both sides
– Coated steel panels or preferably bolted glassed steel panels

The base of the adsorber including the central well would preferably form part of the foundations and be formed in concrete which is integral with the wall foundations and to which the walls are appropriately sealed. The sloped annulus preferably being a part of this concrete construction.

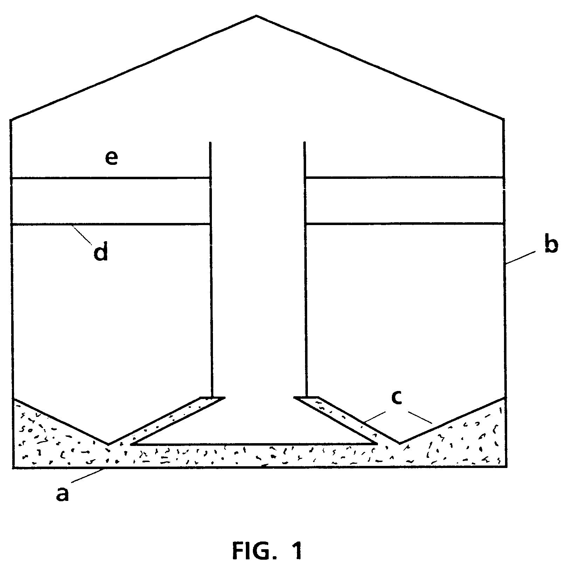

Fig 1 shows a cross section of such an adsorber where

a is the base
b is the external wall
c are the sloped annulus bases
d is the top of the GAC bed
e is the operating water level

## Claims

**CLAIM 1**

An arrangement for treating water with activated carbon comprising an adsorber characterised by having at least part annular plan with the base of the annulus sloped and the annular space divided by radial walls that compartmentalise the annulus.

**CLAIM 2**

An arrangement as claimed in Claim 1 further characterised by the base of the annulus being sloped towards the centre of the annulus.

**CLAIM 3**

An arrangement as claimed in Claim 1 or 2 further characterised by the central well being used to provide entry and exit of service pipes.

**CLAIM 4**

An arrangement as claimed in any previous claim further characterised by the use of one of the compartments formed by the division walls to provide access to the central well.

**CLAIM 5**

An arrangement as claimed in any previous claim characterised by the movement of activated carbon being aided by an undermining system of underwater water jets.

FIG. 1

**European Patent Office**

# EUROPEAN SEARCH REPORT

Application Number

EP  92 30 0007

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | EP-A-0 404 573 (WATERWIZE FILTERS PTY. LIMITED) <br> * column 4, line 58; claim 5 * <br> --- | 1,3,4 | C02F1/28 <br> B01J8/02 |
| Y | DE-A-88 504 (M.FRIEDRICH & GLASS) <br> * figure * <br> ----- | 1,3,4 | |

| | |
|---|---|
| | TECHNICAL FIELDS SEARCHED (Int. Cl.5 ) |
| | C02F <br> B01J <br> B01D |

The present search report has been drawn up for all claims

| Place of search | Date of completion of the search | Examiner |
|---|---|---|
| THE HAGUE | 16 APRIL 1992 | GONZALEZ ARIAS,M.L. |